# FASCICULE DE BREVET EUROPEEN

(11) **EP 1 383 982 B1**
(45) Date de publication et mention de la délivrance du brevet: **30.09.2009**
(21) Numéro de dépôt: 02738204.3
(22) Date de dépôt: 25.04.2002
(51) Int. Cl.: E06B 7/02, E06B 9/32, E06B 9/68

(54) **PROCEDE DE CONTROLE DU NIVEAU D'APPORT D'ECLAIRAGE NATUREL ET/OU D'ENERGIE CALORIFIQUE PAR DES OUVERTURES ET/OU DE LA QUALITE DE L'AIR**
VERFAHREN ZUM ÜBERWACHEN DER TAGESLICHT- UND/ODER WÄRMEENERGIEZUFUHR MITTELS ÖFFNUNGEN UND/ODER DES LUFTZUSTANDES
METHOD FOR CONTROLLING THE LEVEL OF NATURAL LIGHTING AND/OR HEAT ENERGY INPUT THROUGH OPENINGS AND/OR FOR CONTROLLING THE QUALITY OF AIR

(30) Priorité: 02.05.2001 FR 0105879
(43) Date de publication de la demande: 28.01.2004
(73) Titulaire: Archimedes SARL, 34190 Ganges (FR)
(72) Inventeur: JAURE, Serge, 34190 Ganges (FR)
(74) Mandataire: Ravina, Bernard
(86) Numéro de dépôt international: PCT/FR2002/001431
(87) Numéro de publication internationale: WO 2002/088505

(56) Documents cités:
- DE-A- 4 023 673
- DE-A- 19 607 716

## Description

La présente invention concerne un procédé de contrôle automatisé du niveau d'éclairage naturel et/ou d'énergie calorifique par gains solaires et/ou de la qualité de l'air par l'action sur une des ouvertures extérieures au moins de la pièce et/ou par son occultation.

Il est connu des procédés et des installations capables de gérer les fonctions ci-dessus pour un bâtiment complet, la gestion s'effectuant à partir d'un poste central de gestion qui reçoit les données transmises par chaque pièce, les analyse et les gère.
Ces installations sont particulièrement lourdes et coûteuses à mettre en oeuvre en raison des réseaux de câblage à réaliser entre chaque pièce et le poste central de gestion, surtout dans les bâtiments existants et à fortiori s'ils sont occupés.

Dans ces installations centralisées, le contrôle d'une part de l'éclairement et/ou des gains solaires est essentiellement géré par des systèmes de rideaux, stores, voiles ou pare-soleils dont la fonction occultation/désoccultation est commandée par l'unité centrale et d'autre part la fonction contrôle de la qualité de l'air et/ou ventilation est assuré par un système de ventilation mécanique et/ou de conditionnement d'air centralisé.

Cela suppose tout un réseau de câblage d'alimentation et de commande et de gaines de ventilation complexe et coûteux et qu'il n'est pas toujours facile d'adapter à des bâtiments existants.

En outre, le système connu piloté par ordinateur, suppose une programmation longue et difficile et un interfaçage fastidieux lorsque plusieurs systèmes différents doivent être reliés entre eux.
Généralement ces installations manquent de souplesse d'utilisation.

Le brevet DE 4023673 A1 essaie d'apporter une solution par un système d'occultation de la fenêtre et d'ouverture/fermeture de celle-ci pour un apport éventuel d'air extérieur.
Cependant, il n'est pas autonome à une pièce mais relié notamment par le chauffage et la climatisation à un système centralisé concernant l'ensemble de l'immeuble. Ce brevet ne décrit pas l'ensemble des buts et moyens mis en oeuvre dans l'invention.

Il en est de même du brevet DE 19607716 A qui est lui limité à la régulation des moyens d'occultation de la fenêtre et ne concerne pas son ouverture/fermeture qui conditionnent ou non l'apport du frais.

La présente invention se distingue de l'art antérieur en ce qu'elle propose un procédé et des moyens de mise en oeuvre propres à chacune des pièces à traiter indépendamment des autres ou pour certaines fonctions par sous ensembles et en fonction des paramètres spécifiques à chaque pièce.

L'avantage du procédé selon l'invention et de sa mise en oeuvre est donc sa simplicité et son coût plus réduit par rapport à celui de l'art antérieur par utilisation de menuiserie extérieure dont au moins une est utilisée pour au moins une des ouvertures extérieures de la pièce à traiter et qui intègre les différentes fonctions.

Un autre avantage du procédé selon l'invention et de sa mise en oeuvre est donc sa simplicité et sa souplesse d'utilisation.

A cet effet, le procédé selon l'invention est conforme à la revendication 1.

Suivant une autre caractéristique de l'invention, le procédé se distingue en ce qu'une fonction, contrôle de la qualité de l'air est assurée par ouverture/fermeture lorsqu'une présence humaine est détectée dans la pièce.

Suivant une autre caractéristique de l'invention, le procédé se distingue en ce que la détection de la présence humaine dans la pièce n'exclut pas la fonction économie d'énergie mais la module en fonction des paramètres supportables par le ou les occupants de la pièce concernée (courant d'air, éblouissement, etc... ).

Suivant une autre caractéristique de l'invention, le procédé se distingue en ce que les organes moteurs sont asservis à des moyens de détection des paramètres internes (6) ou externes (7) à la pièce, chaque pièce étant munie de ses organes de détection propres ou ceux-ci étant groupés pour plusieurs ouvertures.

Suivant une autre caractéristique de l'invention, le procédé se distingue en ce que les moyens de détection des paramètres internes (6) ou externes (7) de chaque pièce peuvent être raccordés à une gestion technique centralisée du ou des bâtiments concernés.

D'autres avantages et caractéristiques de l'invention apparaîtront à la lecture de la description ci-après d'une forme préférée de réalisation donnée à titre d'exemple non limitatif et illustré par les dessins joints dans lesquels :

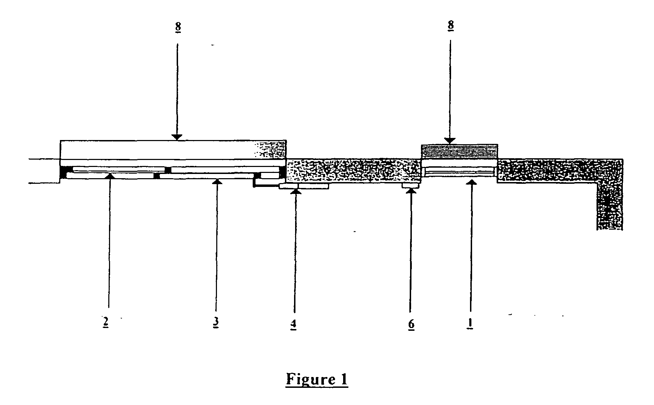

- la figure 1 est une vue en plan d'un bloc baie et d'une menuiserie mis en oeuvre dans un panneau de mur extérieur d'un local,

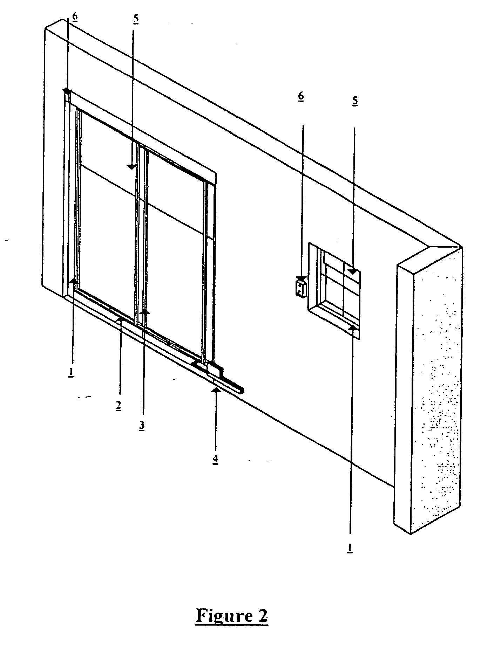

- la figure 2 est une vue en perspective du bloc de menuiserie selon la figure 1 ou placé sur un panneau de mur vu de l'intérieur,

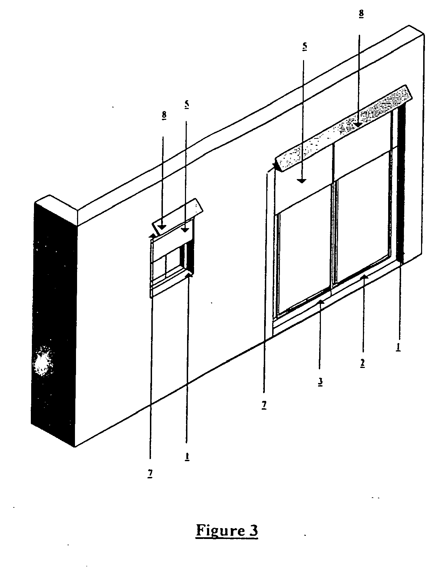

- la figure 3 est une vue en perspective de l'installation vue de l'extérieur,

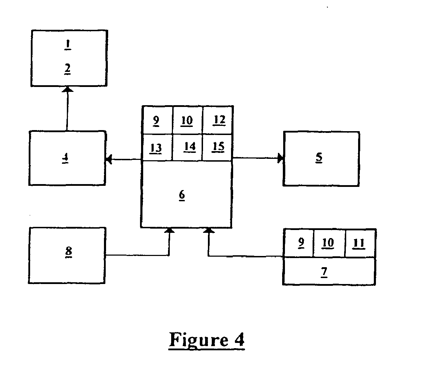

- la figure 4 est un schéma du boîtier de contrôle.

L'invention concerne un procédé de contrôle automatisé du niveau d'éclairement et/ou d'apport d'énergie calorifique dans une pièce d'un bâtiment par au moins une des ouvertures de la dite pièce.

L'invention concerne également un procédé de contrôle de la qualité de l'air par apport d'air extérieur, cet apport régulé s'effectuant par la dite ouverture conjointement ou non avec le contrôle du niveau d'apport d'énergie calorifique ou d'éclairement.

Ce procédé permet de réguler l'éclairement naturel de la pièce.

Il permet d'assurer la protection contre le rayonnement solaire direct et de contrôler les gains solaires à travers un vitrage ainsi que la ventilation et il agit conjointement ou non avec les précédentes fonctions sur le réchauffement, ou le rafraîchissement de la pièce, ainsi que sur la qualité de l'air interne par apport d'air extérieur, de façon dosée.

Plus généralement, le procédé selon l'invention participe par la gestion des gains solaires, le dosage de la qualité de l'air et le dosage de l'apport d'air extérieur à la réalisation d'économie d'énergie et au confort de l'éclairement.

Les gains solaires représentent les apports d'énergie dus aux rayonnements solaires à travers le vitrage, quels que soit :
- la saison,
- le mode de transmission (direct, indirect),
- le mode de restitution dans la pièce (instantané, avec décalage dans le temps).

Ces gains solaires participent au réchauffement de la pièce en hiver et en été.

Ils sont bénéfiques en hiver mais présentent un inconvénient en été car ils provoquent des surchauffes.

La qualité d'air recherchée doit permettre de limiter les niveaux des composants suivants :
- odeurs,
- gaz carbonique, humidité,
- fumée de cigarette.

Le niveau de confort d'éclairement se définit par :
- l'absence de tâches solaires sur une zone sensible (plan de travail, écran, etc... ) : effet du rayonnement direct,
- un niveau d'éclairement moyen de la pièce : effet du rayonnement direct et diffus,
- la limitation de l'éblouissement par contraste entre la baie vitrée et le mur intérieur : effet du rayonnement direct et diffus,
- la conservation de la vue par la baie.

Tous ces paramètres sont réglés d'usine et ajustables par l'occupant au moyen d'une consigne caractérisée par une ou plusieurs sondes intérieures.

La valeur conseillée est fonction de l'application : 500 lux (bureau) à 100 (secteur domestique).

L'économie d'énergie s'effectue par le store ou par l'ouvrant.

Par le store :
- en été (saison chaude) le but est de limiter les gains solaires (direct ou diffus). Donc le store doit permettre l'occultation autant que possible.
- en hiver (saison froide) le but est de favoriser les apports solaires (direct ou diffus). Donc le store doit laisser passer les rayonnements solaires autant que possible.
- en été ou en hiver, si le store présente un pouvoir d'isolation en position occultée, sa position pendant la nuit sera fonction de la différence de température intérieure/extérieur pour favoriser les échanges radiatifs en fonction de la saison.
- Par l'ouvrant :
   - en été (saison chaude), le but est de rafraichir la pièce par renouvellement d'air extérieur lorsqu'il est plus froid qu'à l'intérieur,
   - en hiver (saison froide), le but est de réchauffer la pièce par renouvellement d'air extérieur lorsqu'il est plus chaud qu'à l'intérieur.

Le dosage de l'air extérieur est obtenu par l'ouverture plus ou moins importante de la menuiserie en fonction de l'écart de température intérieur/extérieure et/ou de la vitesse du vent.

Cet aspect est innovant car il suppose que l'on ventile la pièce avec modération pour des besoins de qualité d'air (en occupation). Cela présente les avantages suivants :
- éviter les courants d'air excessifs,
- éviter les gaspillages d'énergie tant en hiver (chauffage) qu'en été (climatisation).

Le taux de ventilation sera paramétré selon le type d'application, les normes en vigueur et/ou la dimension de la pièce pour atteindre un taux de renouvellement d'air donné (0.8 vol/h en habitat et plus en tertiaire).

Les fonctions du procédé ci-dessus sont assurées par la détection de certains paramètres dont certains sont propres et spécifiques à la pièce concernée, et dont d'autres sont propres aux conditions extérieures.

Ces paramètres interférent sur le fonctionnement des éléments de l'installation.

Suivant l'invention, la mise en oeuvre du procédé est propre à chaque pièce et/ou à chaque ouverture extérieure et peut être dupliquée autant de fois que nécessaire à chacune des pièces d'un immeuble avec des variations en fonction des paramètres déterminés détectés qui peuvent être régulés ou programmés dans chacune des pièces, indépendamment des autres.

Le procédé selon l'invention est également lié à la détection des paramètres externes à la pièce concernée qui sont liés à des situations climatiques et météorologiques de crise telles que : vent violent, froid intense, pluie et ont la priorité sur les paramètres internes.

Dans le procédé selon l'invention, au moins un des paramètres internes a priorité : celui de la présence humaine à l'intérieur de la pièce.

Lorsque la présence humaine est détectée à l'intérieur de la pièce concernée, une fonction renouvellement d'air par apport d'air extérieur est assurée ainsi qu'une fonction éclairement naturel.

Dans le cas où aucune présence humaine n'est détectée dans la pièce, une fonction économie d'énergie est assurée par la gestion des apports solaires extérieurs et des apports d'air extérieur en fonction des conditions de saisonnalité et/ou des conditions diurnes ou nocturnes.

Les deux fonctions ci-dessus ne sont pas antinomiques, elles peuvent être indépendantes l'une de l'autre ou combinées et modulées en fonction des paramètres supportables par l'individu dans la pièce compte tenu des conditions de saisonnalité et diurnes ou nocturnes.

L'utilisateur présent dans la pièce pouvant déterminer les dits paramètres, soit par une programmation propre à la pièce, soit par une action manuelle sur la ou les ouverture (s) concernée (s) de la pièce.

La mise en oeuvre du procédé selon l'invention s'effectue par la voie d'au moins une des ouvertures de la pièce vers l'extérieur comme représentée aux dessins annexés.

Cette ouverture est dotée d'une menuiserie formant un bloc baie 1 vitré ou un bloc fenêtre 1 et comprenant des panneaux 2-3, avec vitrage translucide et/ou transparent, un au moins des dits panneaux étant mobiles en ouverture/fermeture complètes ou partielles par rapport à l'autre, s'il y en a deux ou aux autres au moyen d'une transmission 4 et d'un organe moteur qui sont de tout type connu.

Le bloc baie ou fenêtre, génériquement désigné sous le nom de menuiserie est doté d'un store 5 mobile, de tout type connu, assurant la fonction occultation/désoccultation qui intervient sur l'éclairement de la pièce en relation avec les différents paramètres énoncés.

Le store est mobile par également une transmission et un organe moteur.

Les organes moteurs d'ouverture/fermeture totale ou partielle du panneau et du store sont commandés à partir de la détection des paramètres déterminés qui s'effectue par au moins un contrôleur interne 6 électronique doté des sondes adaptées, couplé avec des sondes extérieures 7 des conditions climatiques (de crise, notamment pluie violente, vent violent, températures extrêmes, qui peut avoir la priorité à partir des seuils de paramètres déterminés sur la détection interne).

Dans les exemples de réalisation représentés aux dessins annexés, le bloc de menuiserie comprend des panneaux 2, 3 montés dans un encadrement scellé à la maçonnerie dont au moins, en l'espèce, celui référencé 3, est mobile dans l'encadrement sous l'action de la transmission motorisée 4.

Les panneaux 2, 3 sont mobiles et coulissent dans le plan de la menuiserie.

On peut cependant concevoir que l'invention ne se limite pas à cette forme de réalisation, et que les panneaux peuvent être coulissants verticalement l'un par rapport à l'autre, au moins un étant mobile ou que les panneaux peuvent être rotatifs autour d'un axe d'articulation vertical et/ou horizontal ou comprendre un seul ouvrant (axe vertical ou horizontal), la transmission motorisée 4 étant adaptée mécaniquement en fonction du type d'ouverture.

La motorisation et/ou le déblocage de la fermeture de l'ouvrant peut être réalisé par recours à des matériaux à mémoire de forme qui se déploient par action thermique sur ordre du contrôleur et qui ont une fonction de poussoir.

Chaque bloc fenêtre est doté d'un store d'occultation/désoccultation motorisé.

Le terme store est utilisé de manière générique pour désigner tout système d'occultation/désoccultation de l'ouverture concernée, tel que rideau ou volet ou autre.

Dans l'exemple de réalisation, le store est un rideau mobile en plan parallèle à la menuiserie par enroulement, déroulement.

Tout type de store adaptable à l'objectif de l'invention peut être utilisé, qu'il soit du type à projection, vénitien, etc...

Le boîtier 6 de contrôle des paramètres et des organes moteurs, peut faire partie intégrante de la menuiserie concernée, de même que les sondes 7 externes, l'ensemble étant réalisé en usine et préprogrammé avec possibilité de réglage par l'utilisateur directement sur le boîtier ou par télécommande radio ou infrarouge ou tout autre système adapté.

Le contrôleur comprend essentiellement :
- sondes d'éclairement intérieure(s) et/ou extérieure(s) 9,
- sondes de température intérieure(s) et extérieure(s) 10,
- girouette, anémomètre extérieurs 11,
- sonde de pluie extérieure 12,
- détecteur de présence intérieure 13,
- sonde de concentration en gaz carbonique intérieure 14,
- sonde de taux d'humidité intérieure 15,
- horloge avec horodatage.

Il agit tant sur le moteur du store que de la menuiserie avec fins de course et sécurité anti pincement et sur le moteur.

Il va de soi que sans sortir du cadre de l'invention, le système électronique comporte des moyens d'action manuelle accessibles par l'utilisateur pour agir sur les moteurs d'ouverture/fermeture et d'occultation/désoccultation.

L'alimentation en énergie peut s'effectuer à partir de l'installation électrique domestique ou par des photopiles 8 de tout type connu qui sont de préférence intégrées au bloc de menuiserie du côté externe, les photopiles pouvant fonctionner indépendamment ou non du réseau.

Un système émetteur peut être adapté pour l'échange d'information sur les paramètres détectés dans une ou plusieurs pièces équipées selon l'invention, et pour la commande de plusieurs ouvertures en même temps.

De même, la détection de l'éclairement interne de la pièce peut agir sur l'éclairage artificiel interne à la pièce.

A partir d'une ou de plusieurs pièces avec ouvertures équipées selon l'invention, une connexion est possible avec une unité centralisée du type de l'art antérieur pour lui transmettre des informations que l'unité pourra intégrer dans son système de gestion.

Exemples de fonctionnement :
1 Hiver
   - la nuit, le store est baissé, la fenêtre fermée,
   - le matin, si occupant dans la pièce, le store s'enroule et la fenêtre s'entre-ouvre,
   - si le soleil est présent, et l'éclairement supérieur à la consigne (500 lux), le store va s'ajuster pour retrouver cette consigne,
   - à midi, la pièce se vide, la fenêtre se ferme, le store s'ouvre à plein,
   - à 14 heure, occupation, le store règle à nouveau la consigne d'éclairement, la fenêtre s'entre-ouvre,
   - si l'occupant est gêné par une tâche solaire, il peut réajuster la consigne à la baisse pour obtenir l'abaissement du store jusqu'à éliminer la tâche solaire,
   - le soir, la pièce se vide, le store revient en position de nuit et la fenêtre se referme.
2/ Eté
   - la nuit, le store est relevé et la fenêtre grande ouverte,
   - le matin, si occupant dans la pièce, le store s'ajuste pour respecter la consigne d'éclairement et la fenêtre se referme mais pas totalement,
   - à midi, la pièce se vide, le store s'abaisse complètement et la fenêtre se referme totalement en supposant que la température extérieure est supérieure à l'intérieure,
   - à 14 heure, l'occupant revient, le store s'ajuste, la fenêtre s'entre-ouvre,
   - si l'occupant est gêné, l'occupant peut ajuster la consigne d'éclairement pour éliminer la tâche solaire,
   - le soir, la pièce se vide, le store revient en position nuit et la fenêtre s'ouvrira à fond si l'écart de température est favorable au rafraîchissement.
3/ En inter-saison
   - l'occupant choisira si c'est le mode été ou hiver qui est le plus adapté,
   - dans l'exemple, cela modifiera essentiellement l'ouverture de la fenêtre entre 12h et 14h,
      - si mode hiver : ouverture de la fenêtre pour réchauffement (température extérieure supérieure à température intérieure),
      - si mode été : ouverture de la fenêtre pour rafraîchissement (température extérieure inférieure à température intérieure).
4/ Position de survie
   - fermeture de la fenêtre : en cas de vent violent, de pluie, sécurité anti-intrusion,
   - ouverture de la fenêtre pour assurer la sécurité incendie (désenfumage),
   - enroulement du store : en cas de vent violent.

L'installation peut être complétée à volonté par des options en elles-mêmes connues telles que le raccordement à une centrale de conditionnement d'air, l'alimentation par photopiles, la réception d'ordres manuel ou par télécommande, etc...

L'installation peut être raccordée à une gestion technique centralisée du ou des bâtiment(s) concemé(s).

Les systèmes de matériaux à mémoire de forme peuvent remplacer totalement ou partiellement les organes moteurs électriques.

## Revendications

1. Procédé de contrôle automatisé de l'éclairement naturel et/ou des gains solaires par au moins une des ouvertures, d'une pièce et/ou de contrôle de la qualité de l'air et/ou du rafraîchissement ou réchauffement par apport d'air extérieur par au moins la dite ouverture, celle ci étant dotée d'une menuiserie (1) comprenant un ou des panneaux (2, 3) avec vitrage translucide et/ou transparent, ou opaque, un au moins des dits panneaux étant mobile en ouverture/fermeture par rapport au dormant, ou aux autres panneaux, au moyen d'une transmission et d'un organe moteur (4), la dite menuiserie étant dotée d'un système d'occultation et désoccultation (5) mobile au moyen d'un organe moteur, les dits organes moteurs étant asservis, l'asservissement étant propre à chaque menuiserie et/ou à chaque pièce, l'asservissement étant conditionné par des moyens de détection (6, 7) de paramètres externes et internes à la pièce les paramètres externes comprenant l'éclairement, la température, et des paramètres externes d'incidents climatiques comprenant le vent, la pluie, et la neige; les paramètres internes comprenant la concentration en gaz carbonique, le taux d'humidité, température et lumière, **caractérisé en ce que** ce les paramètres internes comprennent un paramètre interne relatif à la présence humaine, qui est le premier paramètre pris en compte pour le contrôle des conditions internes, ledit premier paramètre interne relatif à la présence humaine étant subordonné aux paramètres externes d'incidents climatiques qui ont la priorité sur tous les autres paramètres pour assurer la mise en sécurité des équipements et,
que lorsque la présence humaine est détectée, une fonction renouvellement d'air par apport d'air extérieur dosé est assurée par la fonction ouverture/fermeture du ou des panneaux (2, 3) de l'ouverture, et/ou une fonction éclairement naturel est assurée par occultation/désoccultation au moyen du rideau, store ou volet (5) en fonction de l'éclairement interne de la pièce et/ou extérieure de la pièce et,
que lorsque aucune présence humaine n'est détectée dans la pièce, une fonction économie d'énergie est assurée par, soit l'ouverture/fermeture des panneaux (2, 3) qui autorisent un rafraîchissement ou réchauffement par introduction d'air extérieur, soit l'occultation/désoccultation au moyen du rideau, store ou volet (5) ce qui assure la gestion des apports solaires extérieurs en fonction des conditions de saisonnalité et/ou des conditions diurnes ou nocturnes, soit les deux à la fois.

2. Procédé selon la revendication 1 **caractérisé en ce qu'**une fonction, contrôle de la qualité de l'air est assurée par ouverture/fermeture lorsqu'une présence humaine est détectée dans la pièce.

3. Procédé selon les revendication 1 et 2 **caractérisé en ce que** la détection de la présence humaine dans la pièce n'exclut pas la fonction économie d'énergie mais la module en fonction des paramètres supportables par le ou les occupants de la pièce concernée tels que courant d'air, éblouissement.

4. Procédé selon l'une quelconque des revendications précédentes **caractérisé en ce que** les organes moteurs sont asservis à des moyens de détection des paramètres internes (6) ou externes (7) à la pièce, chaque pièce étant munie de ses organes de détection propres et ceux-ci étant groupés pour plusieurs ouvertures.

5. Procédé selon la revendication 4 **caractérisé en ce que** les moyens de détection des paramètres internes (6) ou externes (7) de chaque pièce sont raccordés à une gestion technique centralisée du ou des bâtiments concernés.

## Claims

1. Method for the automated control of daylighting and/or solar gains through at least one of the openings of a room, and/or for controlling air quality and/or cooling or heating by the supply of outside air through at least so said the opening, the latter being provided with a joinery (1) comprising one or several panels (2, 3), with translucent and/or transparent or opaque glazing, wherein at least one of so said panels is moved, when opening/closing relative to the casing, or to the other panels, by means of a movement transmission and a motor mechanism (4), so said joinery being provided with an opening and closing shading/blind system (5) witch is moved by means of a motor mechanism, wherein said motor mechanisms are properly-controlled, the properly-control being specific to each joinery and/or to each room, wherein the properly-control is conditioned by means of detection (6,7) of parameters outside and inside the room , external parameters including : daylight, temperature, and external parameters for climatic incidents, including wind, rain and snow, and the internal parameters including : the concentration of carbon dioxide, relative humidity, temperature and light level. wherein the internal parameters comprising an internal parameter related to human presence, which is the first parameter taken into consideration for controlling the internal conditions, **characterised in that** said first internal parameter relating to human presence is subject to the external parameters of climatic incidents, which take priority over all the other parameters, and
**in that** when human presence is detected, an air exchange function by a controlled supply of outside air is provided by the opening/closing function of one or several panels (2, 3) of the opening, and/or a daylighting function is provided by shading/opening by means of the curtain, blind or shutter (5) depending on the internal lighting of the room and/or outside the room, and
**in that** when no human presence is detected in the room, an energy saving function is provided either by the opening/closing of the panels (2, 3) which allow cooling or heating by the introduction of outside air, or moving up or down the curtain, blind or shutter (5), which ensures management of the external solar gains as a function of the seasonal and/or day or night conditions, or both in combination.

2. Method according to Claim 1, **characterised in that** a function, air quality control, is provided by opening/closing when a human presence is detected in the room.

3. Method according to Claims 1 and 2, **characterised in that** the detection of human presence in the room does not exclude the energy saving function but modulates it as a function of the parameters that can be accepted by the occupant or occupants of the room concerned, such as draught, glare.

4. Method according to any of the previous claims, **characterised in that** the motor mechanisms are connected to means of detection of the parameters inside (6) or outside (7) the room, wherein each room being provided with its own detection mechanisms, these being grouped for a plurality of openings.

5. Method according to Claim 4, **characterised in that** the means of detection of the parameters inside (6) or outside (7) each room are connected to a centralised technical management of the building or buildings concerned.

## Patentansprüche

1. Verfahren zur automatischen Steuerung des Tageslichteinfalls und/oder der Sonneneinstrahlung durch mindestens eine der Öffnungen eines Raumes und/oder zur Steuerung der Luftqualität und/oder der Abkühlung oder der Erwärmung durch Zufuhr von Außenluft durch mindestens diese Öffnung, wobei diese mit einem Rahmen (1) versehen ist, welcher eine oder mehrere Scheiben (2, 3) aus lichtdurchlässigem und/oder durchsichtigem oder undurchsichtigem Glas umfasst, wobei mindestens eine der Scheiben geöffnet/geschlossen werden kann, indem sie mittels eines Getriebes oder eines Bewegungsorgans (4) gegenüber der Zarge oder den übrigen Scheiben bewegt wird, wobei der Rahmen mit einem reversiblen Verdunkelungssystem (5) versehen ist, das mittels eines Bewegungsorgans bewegt werden kann, wobei die Bewegungsorgane einer Regelung unterliegen, wobei jeder Rahmen und/oder jeder Raum über seine eigene Regelung verfügt, wobei die Regelung in Abhängigkeit von Mitteln (6, 7) zur Detektion äußerer und innerer Parameter des Raumes erfolgt, wobei die äußeren Parameter den Lichteinfall, die Temperatur umfassen und die äußeren Parameter klimatischer Einflüsse den Wind, den Regen und den Schnee umfassen; wobei die inneren Parameter die Kohlendioxidkonzentration, den Feuchtigkeitsgehalt, die Temperatur und das Licht umfassen, **dadurch gekennzeichnet, dass** die inneren Parameter einen inneren Parameter umfassen, der sich auf die Gegenwart von Menschen bezieht und der bei der Steuerung der inneren Bedingungen als erster Parameter berücksichtigt wird, wobei der innere Parameter mit Bezug auf die Gegenwart von Menschen den äußeren Parametern klimatischer Einflüsse, welche gegenüber allen anderen Parametern Vorrang haben, um die Sicherheit der Einrichtungen zu gewährleisten, untergeordnet ist, und
dass, wenn die Gegenwart von Menschen detektiert wird, eine Lufterneuerungsfunktion durch die Öffnungs-/Schließfunktion der Scheibe(n) (2, 3) der Öffnung gewährleistet wird, indem Außenluft auf dosierte Weise zugeführt wird, und/oder eine Tageslichteinfall-Funktion gewährleistet wird, indem der Vorhang, die Jalousie oder der Fensterladen (5) in Abhängigkeit von den Lichtverhältnissen innerhalb des Raumes und oder außerhalb des Raumes eine reversible Verdunkelung bewirkt, und
dass, wenn in dem Raum keinerlei Gegenwart von Menschen detektiert wird, eine Energiesparfunktion gewährleistet wird, indem entweder die Scheiben (2, 3), welche eine Abkühlung oder eine Erwärmung durch Einlass von Außenluft gestatten, geöffnet/geschlossen werden, oder eine reversible Verdunkelung mittels des Vorhangs, der Jalousie oder des Fensterladens (5) erfolgt, wodurch eine Steuerung des von außen einfallenden Sonnenlichts in Abhängigkeit von den jahreszeitlichen Bedingungen und/oder der Tages-/Nachtzeit gewährleistet wird, oder beides gleichzeitig.

2. Verfahren nach Anspruch 1, **dadurch gekennzeichnet, dass** durch das Öffnen/Schließen eine Funktion der Steuerung der Luftqualität gewährleistet wird, wenn in dem Raum eine Gegenwart von Menschen detektiert wird.

3. Verfahren gemäß den Ansprüchen 1 und 2, **dadurch gekennzeichnet, dass** die Detektion der Gegenwart von Menschen in dem Raum die Energiesparfunktion nicht ausschließt, sondern dass diese in Abhängigkeit von den Parametern, denen die Bewohner des betreffenden Raumes ausgesetzt sind, wie etwa Zugluft, Blendung, abgeändert wird.

4. Verfahren nach einem beliebigen der vorhergehenden Ansprüche, **dadurch gekennzeichnet, dass** die Bewegungsorgane einer Regelung durch Mittel zur Detektion der innerhalb (6) oder außerhalb (7) des Raumes herrschenden Parameter unterliegen, wobei jeder Raum mit eigenen Detektionsorganen versehen ist und diese für mehrere Öffnungen zusammengefasst sind.

5. Verfahren nach Anspruch 4, **dadurch gekennzeichnet, dass** die Mittel zur Detektion der inneren (6) oder äußeren (7) Parameter jedes Raumes an eine zentrale technische Leitstelle für das/die betreffenden Gebäude angeschlossen sind.
